# EUROPÄISCHE PATENTSCHRIFT

(11) **EP 1 621 792 B1**
(45) Veröffentlichungstag und Bekanntmachung des Hinweises auf die Patenterteilung: **02.11.2006**
(21) Anmeldenummer: 05024253.6
(22) Anmeldetag: 07.12.1999
(51) Int. Cl.: F16D 69/04

(54) **Trägerplatte für Reibmaterialblöcke für Bremsbeläge für Schienen- und schienenungebundene Fahrzeuge**
Support plate for friction material for brake linings of rail or rail-bound vehicles
Plaque de support pour matériau de friction pour garnitures de frein pour véhicules sur rails ou roulant sur rails

(43) Veröffentlichungstag der Anmeldung: 01.02.2006
(62) Teilanmeldung aus: 99123979.9
(73) Patentinhaber: AlliedSignal Bremsbelag GmbH, 21509 Glinde (DE)
(72) Erfinder: Himmelsbach, Rainer, 27327 Schwarme (DE); Grimme, Hansjörg, 21509 Glinde (DE)
(74) Vertreter: Richter, Joachim

(56) Entgegenhaltungen:
- EP-A- 0 254 827
- EP-A- 0 442 052
- EP-A- 0 581 988
- EP-A- 0 626 228
- DE-A- 4 138 933
- DE-U1- 8 201 404

## Beschreibung

Die Erfindung betrifft eine Trägerplatte für Reibmaterialblöcke für Bremsbeläge für Schienen- und schienenungebundene Fahrzeuge gemäß dem Oberbegriff des Anspruches 1.

Aus dem DE-GM 82 01 404 ist ein Reibbelag für Scheibenbremsen, insbesondere für Straßenfahrzeuge und Schienenfahrzeuge bekannt. Dieser Reibbelag ist ein- oder mehrteilig ausgebildet und besteht aus einem auf einer Trägerplatte bzw. Trägerblech befestigten Block aus einem gepressten Reibwerkstoff. Die Trägerplatte weist auf der den Reibwerkstoff tragenden Seite ein aufgesintertes Halterungsbett aus einzelnen, mit dem Reibwerkstoff kraft- und formschlüssig bildenden Formkörpern mit Hinterschneidungen, Einziehungen od. dgl. auf. Auf dem Halterungsbett ist der aufgepresste Reibwerkstoff in Blockform unter Ausfüllung der Hinterschneidungen, Einziehungen od. dgl. der einzelnen Formkörper befestigt.

Mit diesem Reibbelag soll eine kraft- und formschlüssige Verbindung zwischen dem Reibwerkstoffblock und dem Trägerblech bei gleichzeitiger Erhöhung der Temperaturbeständigkeit der Haftschicht geschaffen werden. Durch die Ausbildung der Haftschicht aus einer auf dem Trägerblech aufgesinterten Schicht aus Formkörpern soll die hohe Haftung zwischen der auf das Formkörperbett aufgepressten Reibmaterialmischung und dem Trägerblech erreicht werden. Das Aufsintern des Formkörperbettes erfolgt bei gleichmäßiger Erwärmung des Trägerbleches und damit sich das Trägerblech während des Aufsinterprozesses durch die Erhitzung nicht in seiner Struktur und in seinen Eigenschaften verändert, ist es erforderlich, Trägerbleche von größerer Stärke zu verwenden, damit keine Veränderungen der physikalischen Eigenschaften des Trägerplattenmaterials eintreten. Hinzukommt, dass bei diesem Reibbelag keine Trägerbleche aus nichtmetallischen Materialien eingesetzt werden können.

Derartige Reibbeläge, die sich in ihrem praktischen Einsatz seit langem bewährt haben, erfordern oftmals noch die Verwendung einer Zwischenschicht zwischen dem Halterungsbett und dem Reibmaterialblock. Diese Zwischenschicht wurde bisher als Binderfolie oder als Kleber ausgebildet, sie ist jedoch mit verschiedenen Nachteilen verbunden, so dass es wünschenswert ist, eine Möglichkeit zu schaffen, dass auf diese Zwischenschicht verzichtet werden kann. Weiterhin hat es sich gezeigt, dass zwischen den bekannten Halterungsbetten und der Trägerplatte bzw. zwischen dem Halterungsbett und dem Reibwerkstoff Rissbildungen und/oder Korrosion auftreten kann, so dass eine Unterrostung des Reibmaterials kriechend von der Seite auftreten kann, die zu einer Beeinträchtigung der Bremswirkung und - im Extremfall - zu einem Ausfall des Bremsbelages führen könnte.

Das Verkleben des Reibmaterials mit dem Trägerblech erfordert bei der Bremsbelagherstellung durch die Wärmebehandlung des Klebemittels relativ lange Standzeiten, was zu einer geringeren Fertigungszahl führt. Diese Standzeiten sind erforderlich, um eine gute Verklebung des Reibmaterials mit dem Trägerblech zu erreichen. Werden die Standzeiten verkürzt, dann werden schlechte Haftverbindungen erhalten, da kein vollständiger Wärmedurchgang durch das Klebemittel erreicht wird. Hinzu kommt, dass bei der Verwendung von Klebemittel das Trägerblech vorbehandelt sein muss. Die sich durch das Aufbringen von Lackschichten ergebenden Nachteile werden gemäß der EP 0 442 052 A1 dadurch vermieden, dass vor dem Aufpressen des Reibmaterials auf die Trägerplatte auf den Rauhgrund der Trägerplatte ein galvanischer Metallüberzug aufgebracht wird. Das Zusammenwirken von Rauhgrund (Halterungsbett) und galvanischem Überzug führt dabei zu einem hohen Korrosionsschutz für die Trägerplatte, während der Rauhgrund die Haftung zwischen dem Reibmaterial und der Trägerplatte bewirkt, da der galvanische Überzug dem Konturverlauf des Rauhgrundes folgt.

Es hat sich jedoch gezeigt, dass der für die Trägerplatte bisher verwendete handelsübliche Stahl sich in Bezug auf seine Festigkeitseigenschaften nach der Rauhgrund-Behandlung derart verändert, dass sich die Festigkeit des Stahls verringert. Des weiteren hat es sich gezeigt, dass Trägerplatten für Bremsbeläge an bestimmten Stellen, bevorzugterweise in ihren Endbereichen, besonders stark und hoch beansprucht werden. Trägerplatten unter anderem auch mit hammerkopfartigen Enden oder abstützenden Endflächen sind hohen dynamischen und statischen Zug- sowie Druckbelastungen und auch Schwingungen ausgesetzt; Trägerplatten mit Hinterschneidungen in ihren Endbereichen sind stark zugbeansprucht. Diese Zonen in den Endbereichen der Trägerplatte sind sehr hohen mechanischen Spannungen ausgesetzt.

Aus der DE 41 38 933 A1 ist es ferner bekannt, nach dem Aufbringen des Rauhgrundes auf die Trägerplatte und vor dem Aufpressen des Reibwerkstoffes die Trägerplatte im Bereich hochbelasteter Zonen auf Temperaturen zwischen 800° C und 900° C bei einer Behandlungszeit von drei bis fünfzehn Sekunden zu erwärmen und anschließend auf Raumtemperatur abzukühlen.

Die Literaturstelle PATENT ABSTRACTS OF JAPAN Bd. 005, Nr. 158 (M-091), 12. Oktober 1981 (1981-10-12) -& JP 56 086244 A (SUMITOMO ELECTRIC IND LTD), 13. Juli 1981 (1981-07-13) beschreibt eine Reibbelaganordnung für eine Scheibenbremse, nach der auf der Oberfläche eines Metallbleches ein Reibbelag unter Anwendung von Wärme und Druck aufgesintert wird, wobei auf die Oberfläche des Metallbleches vor dem Aufsintern ein Drahtgeflecht durch Punktschweißen oder Löten aufgebracht wird. Um die Reibbelaganordnung zu erhalten, wird auf das so vorbereitete Metallblech der pulverförmige Reibwerkstoff zusammen mit einem Bindemittel unter Verwendung einer Form unter Anwendung von Wärme und Druck so aufgesintert, dass die pulvrige Mischung in den Raum zwischen dem Drahtgeflecht und dem Metallblech eingepresst wird. Bei dieser Reibbelagherstellung wird das Metallblech, die die Trägerplatte bildet, einer Wärmeeinwirkung ausgesetzt und zwar schon durch die Anbringung des Drahtgeflechtes, das die Funktion eines Halterungsbettes dabei hat.

Die Literaturstelle PATENT ABSTRACTS OF JAPAN Bd. 1999, Nr. 13, 30. November 1999 (1999-11-30) -& JP 11 210792 (SUMITOMO ELECTRIC IND LTD; KUSHIRO BRAKE KK), 3. August 1999 (1999-08-03) offenbart einen Scheibenbremsbelag, bei dem ein Reibwerkstoff mit einer metallischen Grundplatte vollständig verbunden ist, wobei die Grundplatte mit Halteelementen versehen ist, die aus der Plattenoberfläche herausstehen und aus einem Kopfteil und einem Schaftteil bestehen, so dass sich T-förmige Verankerungselemente für den Reibwerkstoff ergeben, die aus dem Plattenmaterial ausgeformt sind.

Ein Verfahren zur Veränderung der Oberfläche eines Werkstückes, das mit einem anderen Element verbunden werden soll, beschreibt die EP-A-0 626 228. Dieses Verfahren besteht darin, dass einzelne Stellen der Oberfläche des Werkstückes einem Energiestrahl ausgesetzt werden, wodurch an jeder strahlbeaufschlagten Stelle Material des Werkstückes durch die Einwirkung des Energiestrahles geschmolzen und dabei seitlich versetzt wird, so dass dann nach dem Erhalten des erhitzten Materials eine Vertiefung in dem Werkstück erhalten wird, die von einem Bereich aus verfestigtem Material umgeben ist, der sich wallartig aus der Oberfläche des Werkstückes erhebt und einen halsartig eingezogenen Bereich bildet. Es wird auf diese Weise eine Oberflächenstruktur geschaffen. Dieses Verfahren setzt voraus, dass das Oberflächen zu behandelnde Werkstück eine große Dicke aufweisen muss, um zur Ausbildung der Vertiefungen in der Oberfläche des Werkstückes und der Oberflächenerhebungen genügend Material zur Verfügung zu haben. Mit diesem Verfahren wird in die Struktur des Materials des Werkstückes eingegriffen, was zu einer Veränderung der physikalischen und mechanischen Eigenschaften des Werkstückes führt.

Die EP-A-0 581 988 beschreibt einen Bremsklotz und ein Verfahren zu seiner Herstellung sowie Magnetschienenbremse für Straßen- und Schienenfahrzeuge, insbesondere auch für Schienenfahrzeuge mit hohen und höheren Geschwindigkeiten. Der Bremsklotz besteht aus ein- oder mehrteilig ausgebildeten, auf einem Trägerkörper gepressten Reibwerkstoffblock, wobei mindestens ein Reibwerkstoffblock auf mehreren, nicht in einer Ebene liegenden, aneinander grenzenden Flächenstücken von Teilen des gegossenen Trägerkörpers kraft- und/oder formschlüssig umfasst wird. Der Reibwerkstoffblock ist auf einem Trägerblech befestigt, das auf der den Reibwerkstoffblock tragenden Seite oder auf beiden Seiten je ein aufgesintertes Halterungsbett aus einzelnen mit dem Reibwerkstoffblock kraft- und formschlussbildenden Formkörpern mit Hinterschneidungen, Einziehungen o. dgl. als Rauhgrund aufweist, wobei auf dem Halterungsbett der aufgepresste Reibwerkstoffblock unter Ausfüllung der Hinterschneidungen, Einziehung der einzelnen Formkörper befestigt ist.

Es ist Aufgabe der vorliegenden Erfindung, eine Trägerplatte für Reibmaterialblöcke für Bremsbeläge für Schienen- und schienenungebundene Fahrzeuge gemäß der eingangs beschriebenen Art zur Verfügung zu stellen, mit der die obengenannten Nachteile beseitigt werden und auf einfache Weise einen sicheren und festen, insbesondere hochtemperaturfesten Materialverbund zwischen Trägerplatte und Materialblock auch ohne zusätzliche Klebeschicht und unter Ausschluss einer schädlichen bzw. unerwünschten Wärmebehandlung des gesamten Reibmaterialblockes und ohne Veränderung der physikalischen Eigenschaften des Trägerplattenmaterials gewährleistet.

Diese Aufgabe wird durch eine Trägerplatte der o. g. Art mit den im Anspruch 1 gekennzeichneten Merkmalen gelöst.

Danach umfasst die Erfindung eine Trägerplatte, bei der das Halterungsbett auf der Trägerplatte aus separaten, voneinander beabstandeten Materialerhöhungen als Oberflächenstruktur auf der Trägerplatte aus jeweiligen, separaten Pulveranhäufungen ausgebildet ist und die derart hergestellt ist, dass vermittels einer Düse ein Gemisch aus Trägergas und Metallpulver auf die Oberfläche der Trägerplatte zur Ausbildung eines Halterungsbettes mit separaten, voneinander beabstandeten Materialerhöhungen als Oberflächenstruktur aufgebracht ist, wobei die Materialerhöhungen unter Ausschluss einer Wärmebehandlung der gesamten Trägerplatte mittels lokal oder abschnittsweise auf die Trägerplatte einwirkender Energie, insbesondere Strahlungsenergie, nacheinander oder parallel zueinander erzeugt werden, wobei als Werkstoff für die Trägerplatte Metall, Metalllegierungen, Hartkunststoff, Glas oder Keramik verwendet wird.

Dies hat den Vorteil, dass durch eine geringe thermische Belastung der Trägerplatte beim Herstellen des Halterungsbettes mechanische und physikalische Eigenschaften des Werkstoffes der Trägerplatte nicht negativ beeinflusst werden, wobei gleichzeitig eine verbesserter Materialverbund zwischen Trägerplatte und Materialblock erzielt wird, ohne dass hierfür eine zusätzliche Binder- oder Klebeschicht zwischen Trägerplatte und Materialblock erforderlich ist. Bei weiteren Nachbehandlungen, wie dem Anbringen des Materialblockes auf der Trägerplatte, beispielsweise mittels Aufpressen, wird die erzeugte Struktur des Halterungsbettes nicht verändert. Die Größe des Halterungsbettes kann lokal begrenzt in geeigneter Weise gewählt werden. Da nunmehr die Einschränkungen für die Trägerplatte aufgrund der bisher hohen thermischen Belastung beim Herstellen des Halterungsbettes entfallen, erweitert sich der Anwendungsbereich der Schaffung eines Bindungssystems, wie beispielsweise bei Sandwich-Bauteilen, mittels des Halterungsbettes ganz erheblich. Durch die erfindungsgemäße Struktur des Halterungsbettes wird lediglich die Oberfläche der Trägerplatte geringfügig verändert, jedoch ergeben sich keine unerwünschten Veränderungen des Werkstoffes der Trägerplatte insgesamt hinsichtlich seiner physikalischen und mechanischen Eigenschaften.

Vorzugsweise Weitergestaltungen der Trägerplatte sind in den weiteren Ansprüchen beschrieben.

Zweckmäßigerweise werden die Materialerhöhungen aus Stahl, Metall, das Karbide und / oder Nitride enthalten kann, Keramik, Glas oder einem Hartkunststoff, z. B. einem Duroplast hergestellt. Die Materialerhöhungen werden bevorzugt rasterartig auf die Trägerplatte aufgebracht. Es ist vorteilhaft, die Trägerplatte vor dem Ausbilden der Materialerhöhungen vorzuwärmen.

Dadurch, dass die Materialerhöhungen mittels Aufsintern von Pulver oder mittels Pulverbeschichtung mit Laserstrahl, Flammstrahl oder Plasmastrahl, aufgebracht werden ergibt sich die Möglichkeit, das Halterungsbettes auch auf im Raum gekrümmten, gebogenem bzw. verformte Oberflächen der Trägerplatte ohne Schwierigkeiten auszubilden. Insbesondere bei der Pulverbeschichtung mit Laserstrahl ergibt sich der Vorteil, dass wenig Wärmeenergie in die Trägerplatte eingebracht wird, so dass auch dünne bzw. dünnwandige Trägerbleche ohne Schaden durch thermische Überbelastung zu nehmen mit dem erfindungsgemäßen Halterungsbett versehen werden können.

Beispielsweise werden als Pulver Metallhydride oder Karbide als Additive zu den oben benannten Materialien verwendet.

Zum Vermeiden einer hohen thermischen Belastung der gesamten Trägerplatte kann das Aufsintern des Pulvers bzgl. der Trägerplatte abschnittsweise erfolgen.

Eine zusätzliche feste Halterung des auf die Trägerplatte zu pressenden Materialblockes erzielt man dadurch, dass die Materialerhöhungen auf der Trägerplatte pilzartig ausgebildet werden. Hierbei bilden entsprechende pilzartige Köpfe der Materialerhöhungen Hinterschneidungen, welche durch Umschließung durch den Werkstoff des aufgepressten Materialblockes eine mechanische Halterung bewirken.

Zum Erzielen eines engen und festen Verbundes wird bei der Herstellung eines Bremsbelags der Materialblock in die Oberflächenstruktur des Halterungsbettes eingepresst.

Beispielsweise ist ein Werkstoff für die Materialerhöhungen aus Stahl, Metall, das Karbide und / oder Nitride enthalten kann, Keramik, Glas oder einem Hartkunststoff z. B. Duroplast.

Zweckmäßigerweise ist der Werkstoff für die Trägerplatte Metall, Hartkunststoff oder Keramik.

In vorteilhafter Weise wird bei der Herstellung eines Bremsbelags zwischen dem Materialblock und dem Halterungsbett eine keramische Zwischenschicht angeordnet. Diese Zwischenschicht wirkt als Isolierschicht.

In einer bevorzugten Ausführungsform sind die Materialerhöhungen rasterartig auf der Trägerplatte angeordnet.

Nachstehend wird die Erfindung anhand der beigefügten Zeichnungen näher erläutert. Diese zeigen in
- Fig. 1 bis 3: ein Herstellungsverfahren für eine Trägerplatte eines Bremsbelags,
- Fig. 4: Schematishe Darstellung eines Bremsbelags, welcher Anspruch 1 nicht stützt und
- Fig. 5: eine bevorzugte Ausführungsform der Trägerplatte für den Bremsbelag.

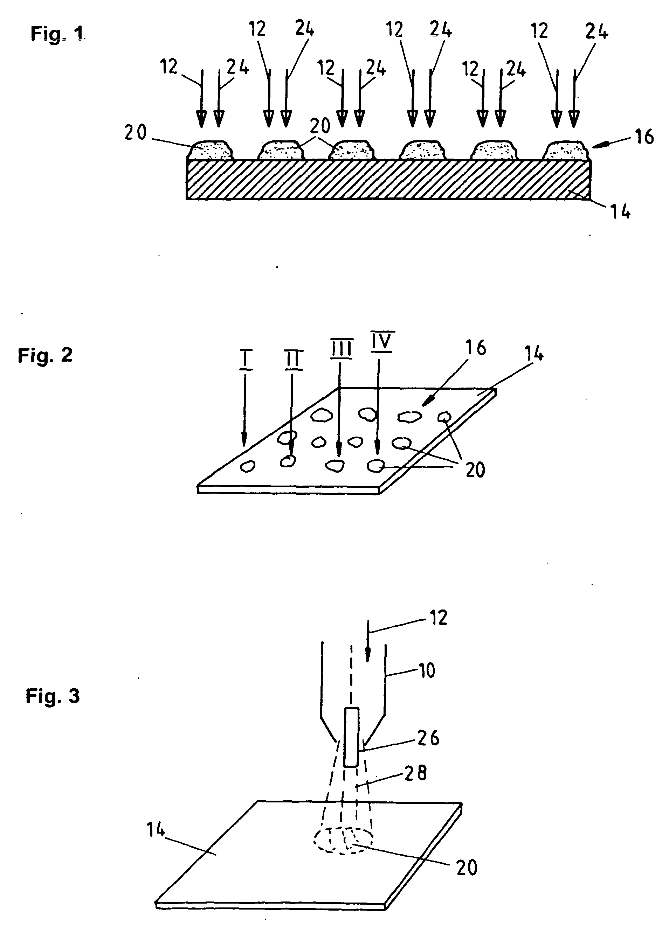

Bei einem Verfahren zum Herstellen eines Bremsbelages wird, wie in Fig. 3 veranschaulicht, mittels einer Düse 10 ein Gemisch aus Trägergas und Metallpulver 12 auf die Oberfläche einer Trägerplatte 14 aufgetragen, so dass ein Halterungsbett 16 entsteht (Fig. 1). Die Düse 10 wird beispielsweise computergesteuert über der Trägerplatte 14 verfahren und trägt das Pulver 12 rasterartig als Materialerhöhungen 20 auf die Oberfläche der Trägerplatte 14 auf.

In einem nachfolgenden Sinterofen wird das vorzugsweise aufgesprühte Pulver 12 strukturiert. Hierbei wird vorzugsweise nicht die gesamte Trägerplatte 14 sondern werden nur einzelne Abschnitte der Trägerplatte 14 nacheinander einer Temperaturbehandlung unterzogen, so dass sich keine starke thermische Belastung der gesamten Trägerplatte ergibt. Ggf. wird das Auftragen des Pulvers 12 mittels der Düse 10 zusätzlich durch Einwirken eines Laser-, Flamm- oder Plasmastrahls unterstützt.

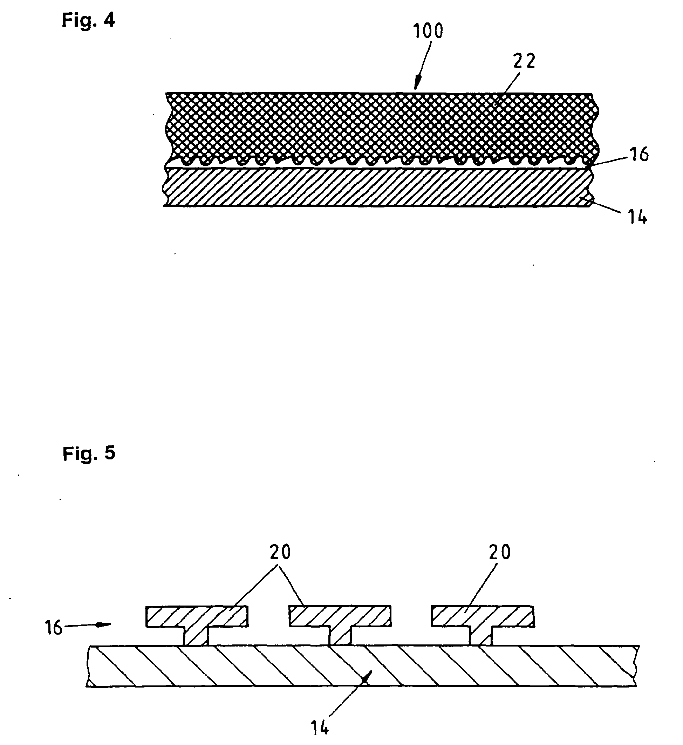

Anschließend wird ein Reibmaterialblock auf das Halterungsbett 16 der Trägerplatte 14 aufgepresst und es ergibt sich ein ähnlich wie in Fig. 4 dargestellter Bremsbelag 100. In Fig.4 sind die Materialerhöhungen 20 nicht beabstandet.

Bei dem Herstellungsverfahren wird das Pulver 12 zusammen mit einer lokal am Ort des Pulvers 12 eingebrachten Energie derart aufgetragen, dass fest mit der Oberfläche der Trägerplatte 14 verbundene Materialerhöhungen 20 entstehen (Fig. 1). Die Materialerhöhungen 20 werden einzeln und nacheinander auf der Oberfläche der Trägerplatte 14 ausgebildet (Fig. 2).

Das Auftragen des Pulvers 12 erfolgt, wie in Fig. 3 dargestellt, mittels der Düse 10 und beispielsweise einem Laser 26, wie einem Neodym-Laser, die in einer Funktionseinheit zur Laserpulverbeschichtung zusammen gefasst sind und beispielsweise computergesteuert über die Trägerplatte 14 verfahren werden. An vorbestimmten Rasterstellen stoppt die Funktionseinheit, bringt Pulver 12 auf und bearbeitet dieses z. B. mittels eines Laserstrahls 28 zu einer Materialerhöhung 20. Der Laser 26 hat den besonderen Vorteil, dass gezielt und nur lokal ein Wärmeeintrag in die Trägerplatte 14 erfolgt. Dies reduziert die thermische Belastung der Trägerplatte 14 ganz erheblich und ermöglicht, dass auch bisher nicht verwendbare, thermisch empfindliche Werkstoffe als Trägerplatte mit Halterungsbett verwendet werden können.

Durch die Strukturausbildung wird die Oberfläche der Trägerplatte 14 vergrößert. Im Bereich der Materialerhöhungen 20, welche als Verbindung zum Reibmaterialblock dienen, wird lediglich nur die Oberfläche der Trägerplatte 14 geringfügig verändert, jedoch ist eine Veränderung des Werkstoffes der Trägerplatte hinsichtlich mechanischer und physikalischer Eigenschaften wirksam vermieden. Statt des Lasers 26 ist auch eine Anwendung einer anderen Energiequelle, wie beispielsweise eines Flammstrahlers, Plasmastrahlers o. ä., möglich. Die Energiequelle muss lediglich die Eigenschaften aufweisen, Wärmeenergie punktuell bzw. in vorbestimmter Weise lokal eng begrenzt aufzubringen, bzw. zu erzeugen.

Fig. 5 veranschaulicht eine bevorzugte Ausführungsform einer Trägerplatte 14 für den Bremsbelag. Hierbei sind die Materialerhöhungen 20 pilzartig ausgebildet, so dass sich durch entsprechende Hinterschneidungen an den Materialerhöhungen eine mechanisch besonders fester Verbund zwischen Trägerplatte 14 und dem Reibmaterialblock 22 ergibt.

## Patentansprüche

1. Trägerplatte für Reibmaterialblöcke (22), wie Bremsbeläge für Schienen- und schienenungebundene Fahrzeuge, wobei zum Herstellen eines Verbundes zwischen der Trägerplatte und dem Reibmaterialblock (22) mindestens ein Halterungsbett (16) für den Reibmaterialblock ausgebildet wird,
**dadurch gekennzeichnet,**
**dass** die Trägerplatte (14) ein Halterungsbett (16) aus separaten, voneinander beabstandeten Materialerhöhungen (20) als Oberflächenstruktur auf der Trägerplatte (14) aus jeweiligen, separaten Pulveranhäufungen aufweist und derart hergestellt ist, dass vermittels einer Düse (10) ein Gemisch aus Trägergas und Metallpulver (12) auf die Oberfläche der Trägerplatte (14) zur Ausbildung des Halterungsbettes (16) mit separaten, voneinander beabstandeten Materialerhöhungen (20) als Oberflächenstruktur aufgebracht ist, wobei die Materialerhöhungen unter Ausschluss einer Wärmebehandlung der gesamten Trägerplatte (14) mittels lokal oder abschnittsweise auf die Trägerplatte (14) einwirkender Energie, insbesondere Strahlungsenergie, nacheinander oder parallel zueinander erzeugt werden, wobei als Werkstoff für die Trägerplatte (14) Metall, Metalllegierungen, Hartkunststoff, Glas oder Keramik verwendet wird.

2. Trägerplatte nach der Anspruch 1,
**dadurch gekennzeichnet,**
**dass** die Oberflächenstruktur bzw. die Materialerhöhungen (20) auf der Trägerplatte (14) pilzartig ausgebildet sind.

3. Trägerplatte nach einem der Ansprüche 1 oder 2,
**dadurch gekennzeichnet,**
**dass** ein Werkstoff für die Oberflächenstrukturen bzw. die Materialerhöhungen (20) Stahl, Metall, das Karbide und/oder Nitride enthält, Keramik, Glas oder Hartkunststoff ist.

4. Trägerplatte nach einem der Ansprüche 1 bis 3,
**dadurch gekennzeichnet,**
**dass** als Werkstoff für die Trägerplatte (14) Metall, Metalllegierungen, Hartkunststoff oder Keramik verwendet wird.

5. Trägerplatte nach einem der Ansprüche 1 bis 4,
**dadurch gekennzeichnet,**
**dass** die Oberflächenstrukturen bzw. Materialerhöhungen (20) rasterartig auf der Trägerplatte (14) angeordnet sind.

6. Trägerplatte nach einem der Ansprüche 1 bis 5,
**dadurch gekennzeichnet,**
**dass** die Materialerhöhungen (20) rasterartig auf die Trägerplatte (14) aufgebracht sind.

## Claims

1. Support plate for friction material blocks (22) such as brake linings for rail vehicles and rail unbound vehicles, whereby at least one fixing bed (16) is configured for the friction material block for realizing a compound between the support plate and the friction material block (22),
**characterized in**
**that** the support plate (14) has a fixing bed (16) made of separate material prominences (20) spaced from each other as surface structure on the support plate (14) made of respective separate powder accumulations and is manufactured in such a manner that a mixture of carrier gas and metal powder (12) is applied by means of a nozzle (10) onto the surface of the support plate (14) for configuring the fixing bed (16) with separate material prominences (20) spaced from each other as surface structure, whereby the material prominences are produced the one after the other or parallel to each other by excluding a thermal treatment of the whole support plate (14) by means of energy acting locally or sectionwise onto the suport plate (14), in particular radiant energy, whereby metal, metal alloys, hard plastic, glass or ceramics is used as a material for the support plate (14).

2. Support plate according to claim 1,
**characterized in**
**that** the surface structure or the material prominences (20) are configured mushroom-type on the support plate (14).

3. Support plate according to any of the claims 1 or 2,
**characterized in**
**that** a material for the surface structures or the material prominences (20) is steel, metal which contains carbides and/or nitrides, ceramics, glass or hard plastic.

4. Support plate according to any of the claims 1 to 3,
**characterized in**
**that** metal, metal alloys, hard plastic or ceramics is used as material for the support plate (14).

5. Support plate according to any of the claims 1 to 4,
**characterized in**
**that** the surface structures or material prominences (20) are placed grid-shaped on the support plate (14).

6. Support plate according to any of the claims 1 to 5,
**characterized in**
**that** the material prominences (20) are applied grid-shaped onto the support plate.

## Revendications

1. Plaque de support pour blocs de matériau de friction (22) tels que garnitures de frein pour véhicules sur rails ou non liés à des rails, au moins un lit de fixation (16) pour le bloc de matériau de friction étant configuré pour réaliser une liaison entre la plaque de support et le bloc de matériau de friction (22),
**caractérisée en ce**
**que** la plaque de support (14) présente un lit de fixation (16) constitué par des bosses de matériau (20) séparées, espacées l'une de l'autre, comme structure de surface sur la plaque de support (14) constituée par des accumulations de poudre respectives séparées et est fabriquée de telle manière qu'un mélange de gaz porteur et de poudre métallique (12) est appliqué au moyen d'une tuyère (10) sur la surface de la plaque de support (14) pour configurer le lit de fixation (16) avec des bosses de matériau séparées, espacées l'une de l'autre, comme structure de surface, les bosses de matériau étant produites l'une après l'autre ou parallèlement l'une à l'autre à l'exclusion d'un traitement thermique de l'ensemble de la plaque de support (14) au moyen d'énergie agissant localement ou section par section sur la plaque de support (14), en particulier d'énergie de rayonnement, du métal, des alliages de métal, du plastique dur, du verre ou de la céramique étant utilisé comme matériau pour la plaque de support (14).

2. Plaque de support selon la revendication 1,
**caractérisée en ce**
**que** la structure de surface ou les bosses de matériau (20) sont configurées de type champignon sur la plaque de support (14).

3. Plaque de support selon l'une des revendications 1 ou 2,
**caractérisée en ce**
**qu'**un matériau pour les structures de surface ou les bosses de matériau (20) est l'acier, un métal qui contient des carbures et/ou des nitrures, de la céramqiue, du verre ou du plastique dur.

4. Plaque de support selon l'une des revendications 1 à 3,
**caractérisée en ce**
**que** du métal, des alliages de métal, du plastique dur ou de la céramique est utilisée comme matériau pour la plaque de support (14).

5. Plaque de support selon l'une des revendications 1 à 4,
**caractérisée en ce**
**que** les structures de surface ou les bosses de matériau (20) sont placées à la manière d'une grille sur la plaque de support (14).

6. Plaque de support selon l'une des revendications 1 à 5,
**caractérisée en ce**
**que** les bosses de matériau (20) sont appliquées à la manière d'une grille sur la plaque de support (14).
